# FASCICULE DE BREVET EUROPEEN

(11) **EP 1 436 823 B1**
(45) Date de publication et mention de la délivrance du brevet: **01.06.2005**
(21) Numéro de dépôt: 02783188.2
(22) Date de dépôt: 20.09.2002
(51) Int. Cl.: H01J 9/02, C01B 31/02

(54) **PROCEDE DE CROISSANCE LOCALISEE DE NANOTUBES ET PROCEDE DE FABRICATION DE CATHODE AUTOALIGNEE UTILISANT LE PROCEDE DE CROISSANCE DE NANOTUBES**
VERFAHREN FÜR LOKALISIERTES WACHSTUM VON NANORÖHREN UND VERFAHREN ZUR HERSTELLUNG EINER SELBSTAUSGERICHTETEN KATHODE MIT DEM NANORÖHRENWACHSTUMSVERFAHREN
METHOD FOR LOCALIZED GROWTH OF NANOTUBES AND METHOD FOR MAKING A SELF-ALIGNED CATHODE USING THE NANOTUBE GROWTH METHOD

(30) Priorité: 20.09.2001 FR 0112222
(43) Date de publication de la demande: 14.07.2004
(73) Titulaire: Thales, 75008 Paris (FR)
(72) Inventeur: LEGAGNEUX, Pierre, Thales Intellectual Property, F-94117 Arcueilcedex (FR); PIRIO, Gilles, Thales Intellectual Property, F-94117 Arcueil cedex (FR); PRIBAT, Didier, Thales Intellectual Property, F-94117 Arcueil cedex (FR); MILNE, William Ireland, University of Cambridge, Cambridge CB2 1PZ (GB); TEO, Kenneth Boh Khin, University of Cambridge, Cambridge CB2 1PZ (GB)
(74) Mandataire: Esselin, Sophie
(86) Numéro de dépôt international: PCT/FR2002/003228
(87) Numéro de publication internationale: WO 2003/025966

(56) Documents cités:
- EP-A- 0 913 508
- EP-A- 1 129 990
- US-A- 5 872 422
- US-A- 6 062 931

## Description

Le domaine de l'invention est celui des nanotubes ou nanofibres pouvant être de type carbone, silicium, bore ou de tout autre alliage basé sur l'un au moins de ces composants (par exemple SIC) et pouvant comprendre de l'azote (SiN, BN, SiCN). Typiquement, ces nanotubes ou nanofibres présentent des diamètres de quelques nanomètres à quelques centaines de nanomètres sur plusieurs microns de hauteur et constituent des super-pointes pour émission de champ, se caractérisant par des facteurs d'amplification de champ électrique très importants.

Ils sont particulièrement intéressants dans les dispositifs à émission de champ et notamment dans la fabrication des cathodes à effet de champ utilisées comme sources froides d'électrons dont les applications sont multiples (tubes électroniques, propulseur ionique, microscopies électroniques, nanolithographie, dispositifs d'affichage plats, etc...).

De manière classique, la réalisation de nanotubes ou nanofibres est effectuée par croissance à partir de plots de catalyseur de très faibles dimensions. Et l'utilisation de nanotubes ou nanofibres dans des dispositifs à émission de champ nécessite généralement le contrôle de la localisation de chaque nanotube ou nanofibre. Pour ce faire, la méthode classique consiste à effectuer des ouvertures submicroniques (de préférence de l'ordre de 100 nm) dans une résine, puis à déposer le catalyseur en couche mince (sur une épaisseur inférieure à environ 10 nm).

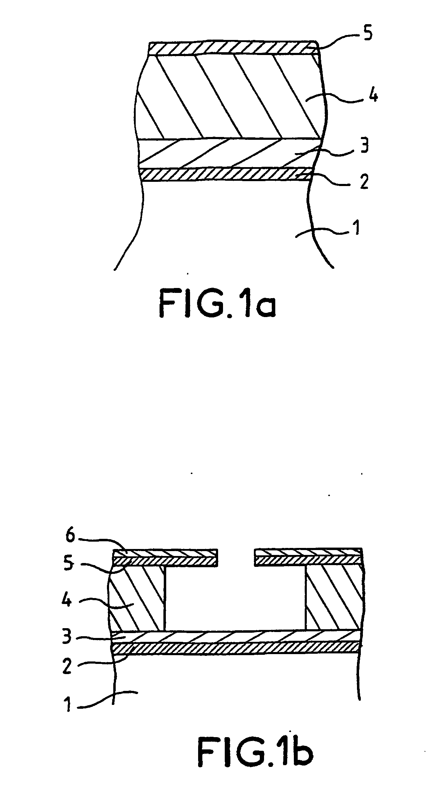

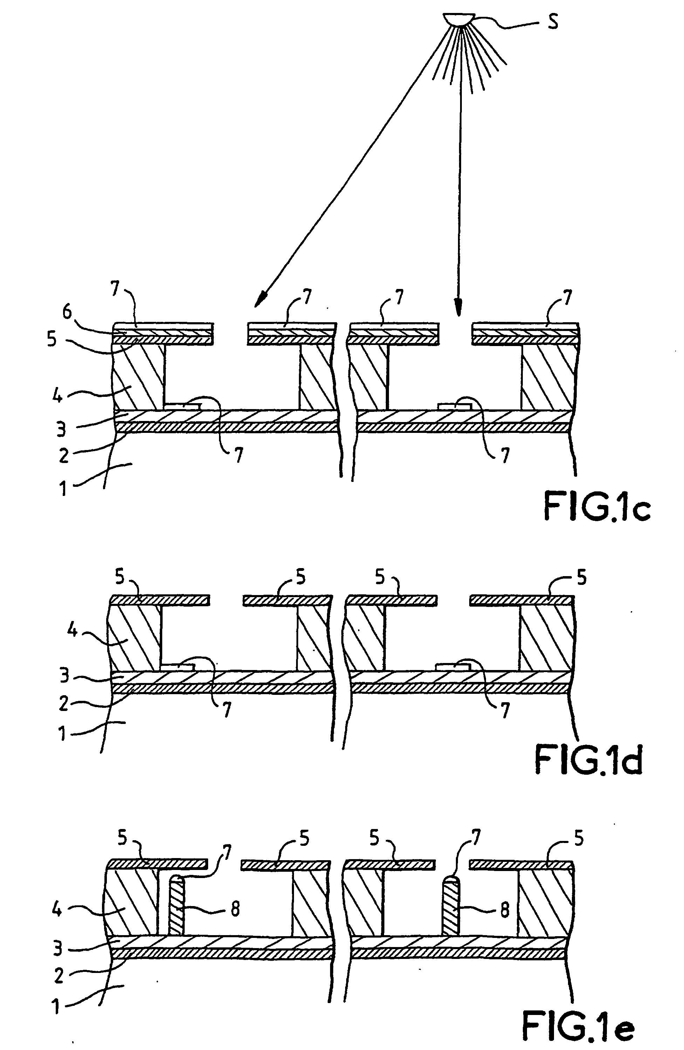

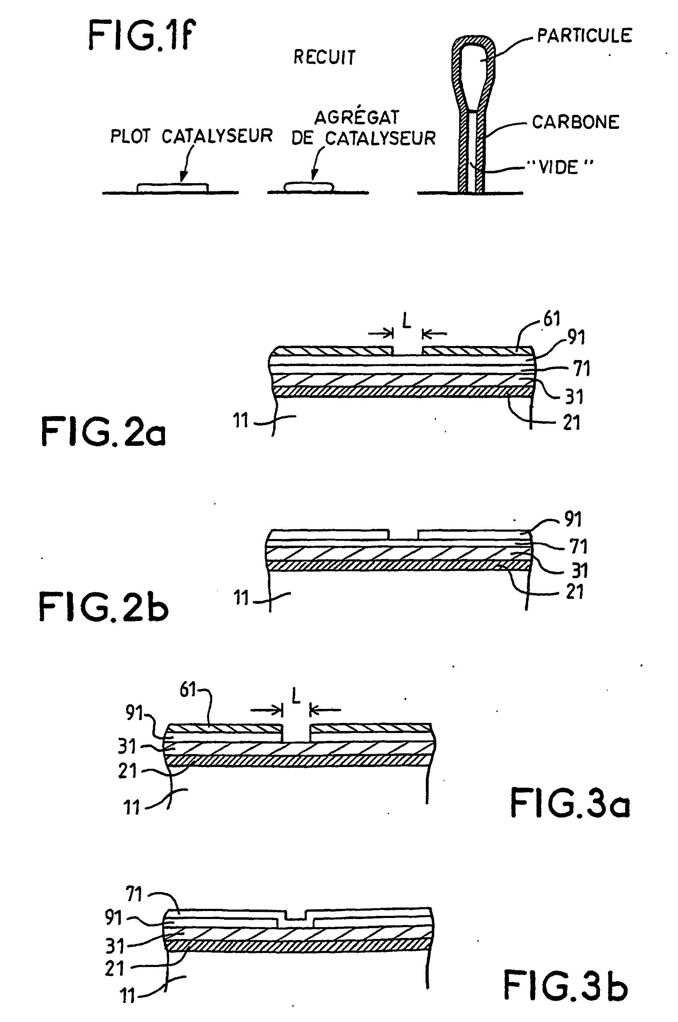

Après une étape de dissolution de la résine, on obtient alors des plots de catalyseur de diamètre équivalent au diamètre des ouvertures dans la résine. L'application de cette méthode à la fabrication de cathodes à effet de champ est illustrée en figure 1. Une cathode à effet de champ comprend généralement l'empilement suivant illustré en figure 1a : un substrat 1, une couche conductrice 2, une barrière de diffusion 3 (pour éviter que le catalyseur ne diffuse dans le substrat), un isolant 4, un film conducteur correspondant à la grille d'extraction des électrons 5.

Une seconde étape consiste à effectuer des ouvertures, de l'ordre de 100 nm dans une résine 6, déposée sur l'empilement illustré en figure 1a, puis à effectuer une gravure anisotrope de la grille et une gravure isotrope de l'isolant, par voie chimique (figure 1b).

La troisième étape consiste à effectuer alors une évaporation à partir d'une source S de catalyseur 7 de façon à déposer un plot de catalyseur de façon autoalignée avec l'ouverture dans la grille d'extraction.

Ce procédé est bien adapté si la source d'évaporation S qui est de faible étendue (de l'ordre du cm), l'ouverture de la grille et l'ouverture de l'isolant sont alignées (figure 1c, motif de droite). Lorsque ce n'est pas le cas (figure 1c, motif de gauche), le plot de catalyseur n'est pas centré dans la cathode et par voie de conséquence le nanotube ou la nanofibre dont la croissance est réalisée à partir de ce plot de catalyseur ne pourra l'être également.

Après avoir effectué l'opération de « lift off » pour retirer la résine 6 et l'excédent de catalyseur 7 (figure 1d), on procède à la croissance des nanotubes 8 ou nanofibres (figure 1e).

Le document EP-A-1 129 990 divulgue un autre procédé de croissance contrôlée de nanotubes sur un substrat de silicone, le procédé comportant la réalisation d'une structure bicouche sur le substrat, composée d'une couche de matériau catalyseur et d'une couche de matériau associé. Le recuit de la structure bicouche engendre des îles semi-circulaires de matériau catalyseur sur le substrat, puis, à une température plus élevée, le matériau catalysateur et le matériau associé sont réduits formant ainsi des silicides-catalysateur à l'interface.

### Etape de croissance des nanotubes ou nanofibres

Les méthodes de préparation sont : la décharge électrique, la pyrolise, les méthodes par voies physique telles que l'ablation laser et les méthodes par voies chimiques CVD (chemical vapor deposition) ou PECVD (Plasma enhanced CVD).

La méthode qui semble la mieux adaptée pour l'application cathode à effet de champ est la méthode PECVD qui est assisté par plasma DC (plasma continu), RF (radio fréquence) ou microonde. En effet elle permet l'obtention de nanotubes ou nanofibres orientées perpendiculairement par rapport au substrat

Les nanotubes ou nanofibres montrés sur toutes les figures du brevet sont dessinés de façon schématique.

Par exemple dans le cas de nanotubes de carbone (Figure 1f) la particule de catalyseur a une forme allongée et une fine couche de carbone encapsule cette particule. De plus les nanotubes contrairement aux nanofibres sont creux.

Le diamètre des nanotubes/nanofibres sont de diamètre inférieur à celui du plot de catalyseur car la taille d'un agrégat de catalyseur est plus faible que celle du plot et qu'après croissance la particule de catalyseur prend généralement une forme allongée.

Il apparaît ainsi que la cathode de droite est opérationnelle tandis que celle de gauche va générer un court-circuit. Le cas illustré en figure 1 correspond à un cas extrême mais il est à noter qu'un faible désalignement de nanotube ou nanofibre par rapport au trou (de l'ordre de 100 nm) dans la grille induit un mauvais fonctionnement de la cathode (C. Xie et al., Journal of Vacuum Science & Technology B18, 1833 (2000)).

Dans ce contexte, l'invention propose un nouveau procédé de croissance localisée de nanotubes ou nanofibres permettant de centrer avec une très grande précision les plots de catalyseurs sur lesquels croissent les nanotubes.

Plus précisément, l'invention a pour objet un procédé de croissance contrôlée de nanotubes ou nanofibres sur un substrat, caractérisé en ce qu'il comporte :
- la réalisation d'une structure bicouche sur le substrat, composée d'une couche de matériau catalyseur et d'une couche de matériau associé, ledit matériau associé étant tel qu'il forme un alliage avec le matériau catalyseur à haute température, ladite structure bicouche comportant au moins une première ouverture au niveau de la couche de matériau associé, de manière à constituer localement une structure d'une couche unique de matériau catalyseur ;
- le recuit de la structure bicouche, à haute température, de manière à former une couche unique d'alliage de matériau catalyseur et de matériau associé, ladite couche unique d'alliage présentant au moins une seconde ouverture de manière à localiser le matériau catalyseur dans cette seconde ouverture ;
- la croissance des nanotubes ou nanofibres à partir du matériau catalyseur localisé dans la seconde ouverture.

Selon le procédé de l'invention, les premières ouvertures et les secondes ouvertures peuvent avantageusement être autoalignées.

Selon une variante de l'invention, le procédé comprend le dépôt de la couche de matériau associé, à la surface de la couche de matériau catalyseur préalablement déposée, puis la réalisation d'au moins une première ouverture dans la couche de matériau associé.

Selon une autre variante de l'invention, le procédé comprend le dépôt de la couche de matériau associé à la surface du substrat, la réalisation d'au moins une première ouverture dans la couche de matériau associé, puis le dépôt de la couche de catalyseur à la surface de la couche de matériau associé et au niveau de ladite première ouverture.

Selon une variante de l'invention, les nanotubes ou nanofibres sont en carbone, en silicium ou en bore ou en alliage basé sur l'un au moins de ces éléments et pouvant comprendre de l'azote, le matériau catalyseur pouvant être de type nickel, cobalt, fer, platine, yttrium ou tout autre alliage basé sur l'un au moins de ces éléments, le matériau associé pouvant être de type silicium. Le matériau associé est un matériau qui n'est pas une barrière de diffusion pour la catalyseur.

De préférence le procédé selon l'invention comprend le dépôt préalable d'une couche de barrière de diffusion vis-à-vis du matériau catalyseur à la surface du substrat.

L'invention a aussi pour objet un procédé de réalisation de cathode à effet de champ comprenant le procédé de croissance localisée de nanotubes selon l'invention.

Plus précisément ce procédé comprend :
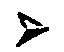 la réalisation d'un empilement de couches sur un substrat comportant :
   - une structure bicouche composée d'une couche de matériau catalyseur et d'une couche de matériau associé, ledit matériau associé étant tel qu'il forme un alliage avec le matériau catalyseur à haute température,
   - une couche épaisse d'isolant,
   - une couche conductrice constitutive de la grille,
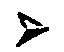 la gravure anisotrope de la grille et la gravure isotrope de l'isolant ;
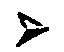 la gravure anisotrope de la couche de matériau associé :
   lesdites gravures de la grille et du matériau associé définissant respectivement au moins une première ouverture dans la grille et au moins une première ouverture dans la couche de matériau associé, autoalignées ;
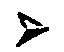 le recuit à haute température de l'ensemble préconstitué de manière à former une couche unique d'alliage de matériau catalyseur et de matériau associé, ladite couche unique d'alliage présentant au moins une seconde ouverture de manière à localiser le matériau catalyseur dans cette seconde ouverture ;
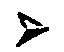 la croissance localisée des nanotubes à partir du matériau catalyseur dans la seconde ouverture.

L'invention a encore pour objet un second procédé de fabrication de cathode à effet de champ comprenant le procédé de croissance localisée de nanotubes selon l'invention.

Plus précisément, ce procédé comprend les étapes suivantes :
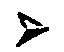 la réalisation d'un empilement de couches sur un substrat comportant :
   - une couche de matériau associé, ledit matériau associé étant tel qu'il forme un alliage avec un matériau catalyseur de croissance de nanotubes ou nanofibres, à haute température,
   - une couche épaisse d'isolant,
   - une couche conductrice constitutive de la grille de la cathode,
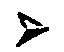 la gravure anisotrope de la grille et la gravure isotrope de l'isolant ;
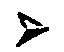 la gravure anisotrope de la couche de matériau associé :
   lesdites gravures de la grille et du matériau associé définissant respectivement au moins une première ouverture dans la grille et au moins une première ouverture dans la couche de matériau associé, autoalignées,
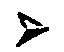 le dépôt d'une couche de catalyseur sur la couche de matériau associé et sur son ouverture ;
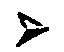 le recuit à haute température de l'ensemble préconstitué de manière à fournir une couche unique d'alliage de matériau catalyseur et de matériau associé, ladite couche unique d'alliage présentant au moins une seconde ouverture de manière à localiser le matériau catalyseur dans cette seconde ouverture ;
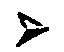 la croissance localisée des nanotubes ou nanofibres à partir du matériau catalyseur dans la seconde ouverture.

Selon ces procédés de fabrication de cathode à effet de champ, les secondes ouvertures sont avantageusement autoalignées avec les premières ouvertures.

Avantageusement, le dépôt de la couche de catalyseur peut être effectué par évaporation homogène de matériau catalyseur.

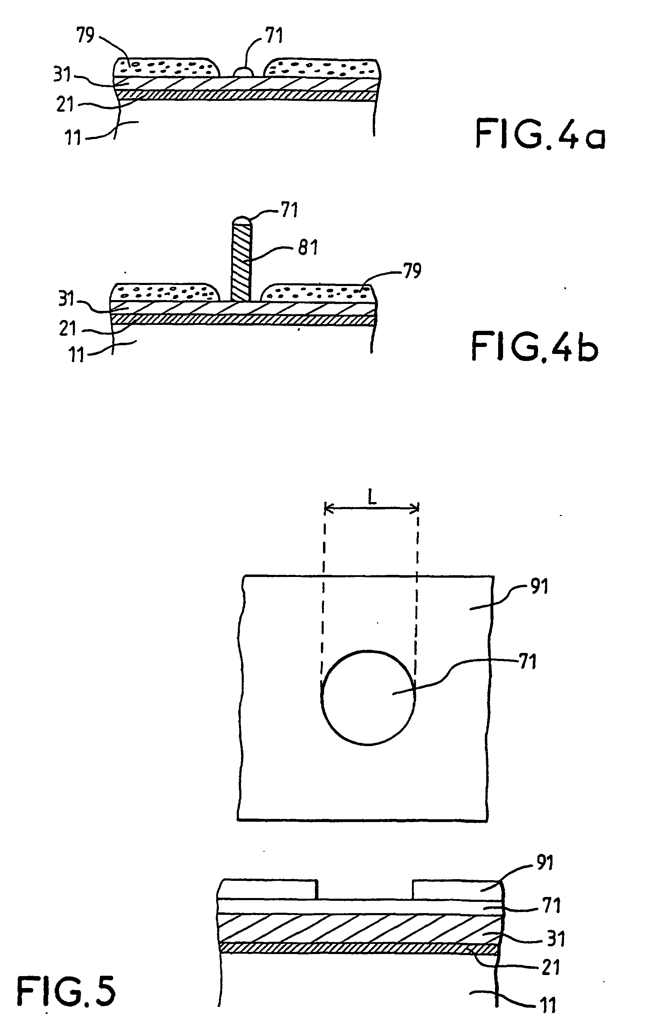

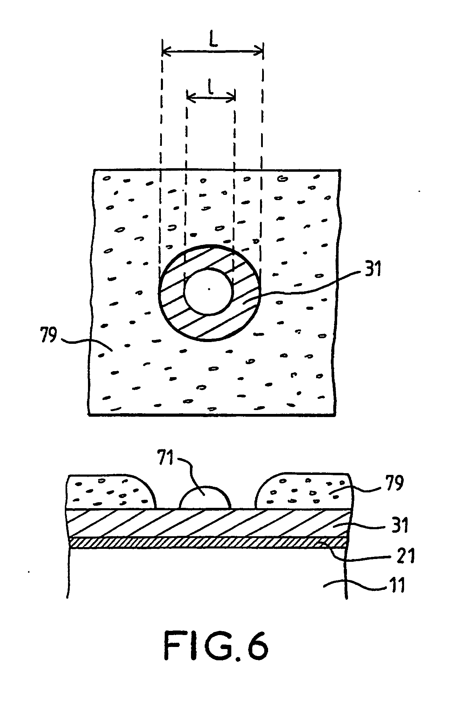

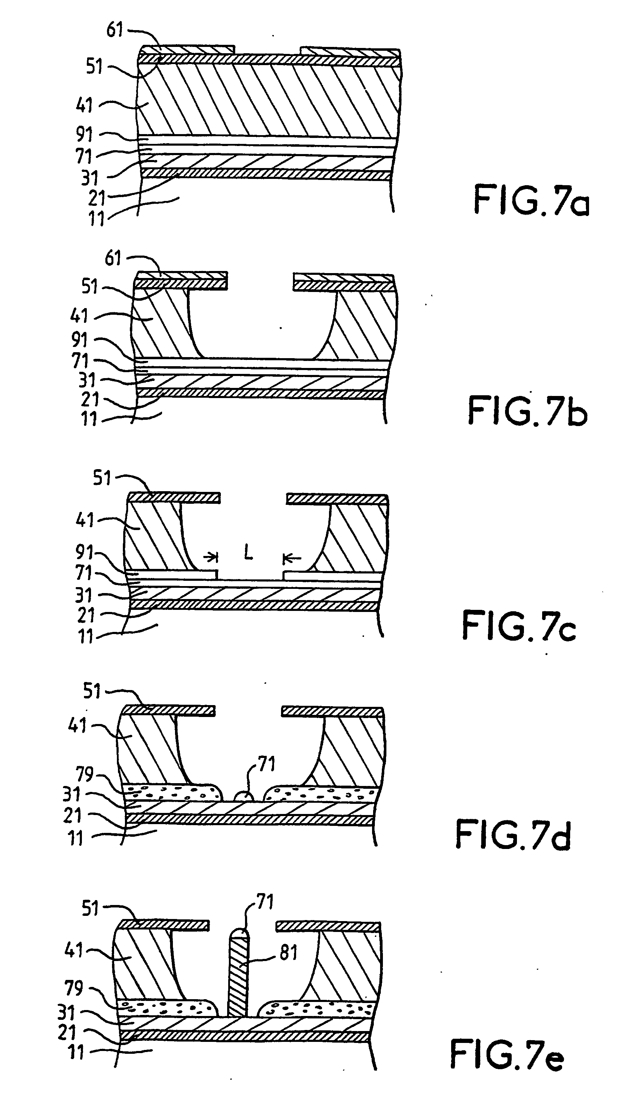

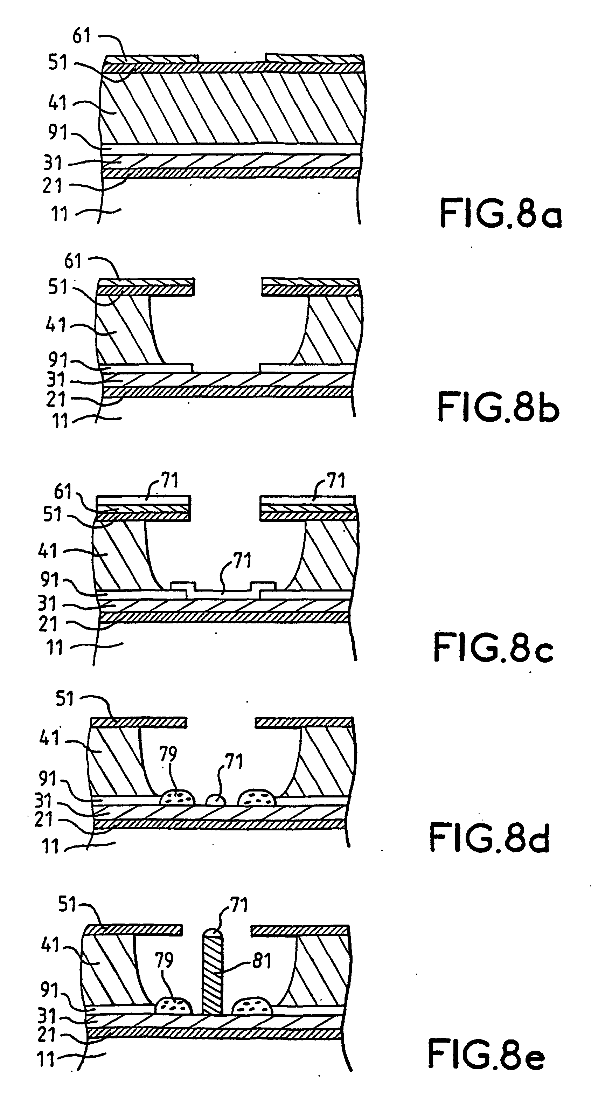

L'invention sera mieux comprise et d'autres avantages apparaîtront à la lecture de la description qui va suivre et grâce aux figures annexées parmi lesquelles :
■ les figures 1a-1f illustrent un procédé de fabrication de cathode à effet de champ selon l'art connu ;
■ les figures 2a-2b illustrent les premières étapes d'une première variante du procédé de croissance contrôlée de nanotubes ou nanofibres selon l'invention ;
■ les figures 3a-3b illustrent les premières étapes d'une seconde variante du procédé de croissance contrôlée de nanotubes ou nanofibres selon l'invention ;
■ les figures 4a-4b illustrent des étapes communes aux procédés illustrés en figure 2 et figure 3, utilisées dans des procédés de croissance contrôlée de nanotubes ou nanofibres selon l'invention ;
■ la figure 5 illustre une vue en coupe et une vue de dessus d'une structure bicouche selon l'invention, avant formation de l'alliage matériau catalyseur/matériau associé ;
■ la figure 6 illustre une vue en coupe et une vue de dessus d'une structure bicouche selon l'invention, après formation de l'alliage matériau catalyseur/matériau associé ;
■ les figures 7a-7e illustrent les étapes d'une première variante de procédé de fabrication de cathode à effet de champ selon l'invention ;
■ les figures 8a-8e illustrent les étapes d'une seconde variante de procédé de fabrication de cathode à effet de champ selon l'invention.

De manière générale, la présente invention propose un nouveau procédé de localisation de plots de catalyseur sur un substrat. Ce nouveau procédé permet la fabrication de cathodes pour lesquelles les nanotubes ou nanofibres sont autoalignées avec l'ouverture dans la grille d'extraction. Pour les applications ciblées dans le préambule de la présente demande, on réalisera avantageusement des matrices de plots de catalyseur.

Ces plots de catalyseur définissent précisément les emplacements sur lesquels vont pouvoir croître les nanotubes ou les nanofibres.

Le principe de base de l'invention est illustré en figure 2 et en figure 3 qui décrivent deux alternatives de l'invention consistant soit à déposer une couche de matériau associé sur une couche de catalyseur (figure 2), soit à déposer une couche de catalyseur sur une couche de matériau associé, préalablement gravée (figure 3).

Nous allons décrire en détails ci-après ces deux alternatives. Selon la première alternative on procède comme illustré en figure 2a aux dépôts respectifs sur un substrat 11, d'une couche conductrice 21, si le substrat n'est pas conducteur, une couche barrière de diffusion 31, une couche de matériau catalyseur 71, une couche de matériau associé 91, puis une couche de résine 61, grâce à laquelle on peut réaliser des opérations de lithographie.

On effectue ainsi une opération de lithographie permettant de réaliser une première ouverture de dimension L inférieure à typiquement 300 nm.

Dans une seconde étape, illustrée en figure 2b, on procède à la gravure sélective de la couche de matériau associé 91. On obtient ainsi une structure bicouche 71, 91 présentant une première ouverture de dimension L, au niveau de la couche de matériau associé, laissant à nu localement la couche de matériau catalyseur 71.

Selon une autre variante illustrée en figure 3, on réalise dans un premier temps, un empilement au-dessus d'un substrat 11, d'une couche conductrice 21, d'une couche de barrière de diffusion 31, d'une couche de matériau associé 91, puis d'une couche de résine 61. On procède alors à la gravure de l'ensemble des couches 61 et 91, pour réaliser une première ouverture de dimension L, au sein de la couche de matériau associé 91 (figure 3a).

Après retrait de la résine, on procède au dépôt d'une couche de matériau catalyseur 71 (figure 3b). On obtient également une structure bicouche 91, 71 présentant une première ouverture de dimension L au niveau de la couche de matériau associé, laissant localement une structure monocouche de matériau catalyseur.

Quelle que soit la variante, on procède alors à l'opération de recuit à haute température (illustrée en figure 4a) qui induit la formation d'un alliage de matériau associé et de matériau catalyseur 79, dans les zones où le matériau associé 91 n'a pas été gravé. Dans les zones où seule demeure la couche unique de matériau catalyseur, on génère un agrégat d'allure typiquement semi-sphérique de matériau catalyseur pur 71.

Enfin, on procède à la croissance des nanotubes 81, à l'emplacement des agrégats préalablement formés de matériau catalyseur (figure 4b). Ainsi, le procédé de l'invention peut permettre d'obtenir une taille d'agrégat plus petite que l'ouverture effectuée dans la résine et de dimension L. Les figures 5 et 6 illustrent ce phénomène. En effet, la figure 5 montre une vue de dessus et une vue en coupe d'une structure bicouche présentant une première ouverture dans la couche de matériau associé 91, de dimension L. La figure 6 illustre quant à elle, la même configuration après recuit et met en évidence la formation de l'alliage qui peut générer une seconde ouverture de dimension ℓ inférieure à la dimension L, et la création d'un agrégat de matériau catalyseur 71. En comparaison avec les méthodes employées selon l'art connu, on peut alors à taille d'agrégat équivalente, utiliser un équipement de lithographie de moindre résolution (typiquement 300 nm au lieu de 100 nm). Cette réduction de taille s'additionne naturellement aux effets de réduction de taille dus au recuit avant croissance ou au mécanisme de croissance qui ont été décrits plus haut.

Si on choisit un rapport nombre d'atomes de matériau associé sur nombre d'atomes de matériau catalyseur, supérieur à celui correspondant à la composition de l'alliage matériau associé-matériau catalyseur, à l'équilibre, à la température de recuit thermique, le matériau catalyseur va diffuser vers l'extérieur de façon à réagir avec le matériau associé en excès. On obtient donc un agrégat de diamètre inférieur à celui du motif écrit dans la résine. L'effet de réduction dépend de l'excès de matériau associé, de la température de traitement thermique et du temps de traitement.

Pour les catalyseurs Ni, Fe et Co on peut par exemple utiliser comme matériau associé du silicium, ce matériau présentant l'avantage d'être bien connu de l'homme de l'art. Le recuit effectué avant croissance des nanotubes/nanofibres va induire la formation d'un siliciure ASiₓ, A correspondant au matériau catalytique. Pour les températures de croissance généralement utilisés (600 à 800°C) et pour des couches minces de Si et de catalyseur (∼100 nm), x peut varier typiquement de 1 à 2. Pour donner un exemple simple, supposons que l'on effectue un recuit qui permette la formation de l'alliage stable CoSi₂, NiSi₂ ou FeSi₂. On peut alors supprimer toute diffusion latérale si l'épaisseur des couches de catalyseur et de Si sont telles que le rapport nombre d'atomes Si sur nombre d'atomes A est égal à 2. Par contre si l'on augmente ce rapport , une diffusion latérale du catalyseur va s'opérer de façon à former l'alliage stable. Cette diffusion dépendra de la valeur de ce rapport, de la température de recuit, du temps de recuit mais aussi de la facilité qu'a le catalyseur à diffuser sur le matériau sousjacent.

Les matériaux catalyseurs sont choisis en fonction de la nature des nanotubes ou nanofibres que l'on cherche à faire croître. Typiquement pour des nanotubes de carbone, le matériau catalyseur peut être du nickel, du cobalt ou du fer, pour des nanotubes ou des nanofibres de silicium, le matériau catalyseur peut être de l'or, du cobalt ou du fer.

Le matériau associé, pour former un alliage avec le matériau catalyseur, à haute température, ne doit pas constituer une barrière de diffusion pour ce dernier. Beaucoup de matériaux peuvent convenir et notamment le silicium.

Les matériaux constitutifs de la couche barrière de diffusion (matériau référencé 31) peuvent avantageusement être de type TiN, ou de manière classique SiO₂. Dans ce dernier cas, on choisira une épaisseur très mince de manière à favoriser une conduction par effet tunnel (typiquement une épaisseur inférieure à une dizaine de nanomètre) qui ne bloquera pas l'émission de champ, dans le cas d'applications de type cathode à effet de champ.

Dans la pratique, les propriétés isolantes de cette couche sont rapidement dégradées par le passage du courant lors de l'émission électronique.

Nous allons décrire ci-après un premier exemple de procédé selon l'invention, de fabrication de cathode autoalignée à effet de champ dont les étapes sont illustrées par les figures 7a à 7e.

On procède dans un premier temps à l'empilement de couches suivant un substrat 11
◆ une couche conductrice 21
◆ une couche barrière de diffusion 31 vis-à-vis du matériau catalyseur
◆ une couche de matériau catalyseur 71
◆ une couche de matériau associé 91
◆ une couche épaisse d'isolant 41
◆ une couche conductrice constitutive de la grille, 51
◆ une couche de résine 61

On procède alors à une première ouverture de dimension inférieure à environ 300 nm, obtenue par lithographie de la résine (figure 7a).

On effectue alors une gravure anisotrope de la grille d'extraction qui est un film conducteur et une gravure isotrope de l'isolant (qui peut être SiO₂) par gravure chimique (figure 7b) qui entraîne la sous-gravure (flancs concaves) dudit isolant.

On procède alors à la gravure anisotrope du matériau associé 91, autoalignée avec l'ouverture de la résine et de la grille d'extraction (figure 7c). Cette opération peut être réalisée .par gravure ionique réactive dans un réacteur maintenu à basse pression (inférieure typiquement à 10 m Torr) dans des conditions bien connues de l'homme de l'art. Du fait de son principe de fonctionnement, ce type de réacteur permet d'obtenir un flux d'ions parfaitement perpendiculaire au substrat et ce sur de grandes surfaces.

On notera que l'ouverture dans la grille d'extraction peut être agrandie si elle est gravée de manière isotrope. Cette opération ne modifie pas le diamètre de l'ouverture dans le matériau associé 91 puisque son diamètre est fixé par le diamètre de l'ouverture dans la résine.

On procède alors à l'opération de recuit thermique qui permet de former l'alliage 79 de matériau associé et de matériau catalyseur, ainsi que la formation d'un agrégat de matériau catalyseur pur (figure 7d). De ce fait, on peut obtenir une croissance de nanotubes ou nanofibres 81 parfaitement alignée avec l'ouverture dans la grille d'extraction (figure 7e).

Selon un second exemple de procédé selon l'invention, de fabrication de cathode autoalignée à effet de champ on procède dans un premier temps à l'empilement de couches, suivant sur un substrat 11
◆ une couche conductrice 21
◆ une couche barrière de diffusion 31 vis-à-vis du matériau catalyseur
◆ une couche de matériau catalyseur 91
◆ une couche épaisse d'isolant 41
◆ une couche conductrice constitutive de la grille d'extraction 51
◆ une couche de résine 61

On procède alors à une première ouverture, obtenue par lithographie dans la résine (figure 8a).

On effectue une gravure anisotrope de la grille et isotrope de l'isolant. On effectue ensuite une gravure anisotrope du matériau associé 91, autoalignée avec l'ouverture dans la résine (figure 8b).

On procède alors au dépôt d'une couche de matériau catalyseur 71, par évaporation dudit matériau catalyseur. Lors de cette opération, on peut effectuer différentes rotations du porte échantillon par rapport à la source d'évaporation. Un tel procédé permet d'obtenir un dépôt uniforme de dimension supérieure à l'ouverture de la résine et ainsi constituer localement une structure bicouche qui permettra ultérieurement la formation de l'alliage (figure 8c). On supprime alors la résine par étape classique de lithographie, ce qui entraîne la suppression de la couche supérieure de matériau catalyseur au-dessus de ladite résine.

Puis on procède au recuit à haute température pour obtenir la formation de l'alliage matériau associé/matériau catalyseur 91/79 et d'un agrégat de matériau catalyseur au niveau de l'ouverture dans le matériau 91 (figure 8d).

La croissance de nanotubes ou nanofibres 81 peut alors être effectuée de manière parfaitement autoalignée avec la grille d'extraction (figure 8e).

## Revendications

1. Procédé de croissance contrôlée de nanotubes ou nanofibres sur un substrat comportant :
- la réalisation d'une structure bicouche sur le substrat (11), composée d'une couche de matériau catalyseur (71) et d'une couche de matériau associé (91), ledit matériau associé étant tel qu'il forme un alliage non catalytique avec le matériau catalyseur à haute température, ladite structure bicouche comportant au moins une première ouverture au niveau de la couche de matériau associé, de manière à constituer localement une structure de couche unique de matériau catalyseur ;
- le recuit de la structure bicouche, à haute température, de manière à former une couche unique d'alliage (79) de matériau catalyseur et de matériau associé, ladite couche unique d'alliage présentant au moins une seconde ouverture de manière à localiser le matériau catalyseur dans cette seconde ouverture ;
- la croissance des nanotubes ou nanofibres (81) à partir du matériau catalyseur localisé dans la seconde ouverture.

2. Procédé de croissance contrôlée de nanotubes ou nanofibres selon la revendication 1, les premières ouvertures et les secondes ouvertures étant autoalignées.

3. Procédé de croissance contrôlée de nanotubes ou nanofibres, selon l'une des revendications 1 ou 2, comportant:
- le dépôt de la couche de matériau associé (91) à la surface de la couche de matériau catalyseur (71) ;
- la réalisation d'au moins une première ouverture dans la couche de matériau associé (91).

4. Procédé de croissance contrôlée de nanotubes ou nanofibres, selon l'une des revendications 1 ou 2 comportant:
- le dépôt de la couche de matériau associé (91), à la surface du substrat (11);
- la réalisation d'au moins une première ouverture dans la couche de matériau associé (91) ;
- le dépôt de la couche de catalyseur (71) à la surface de la couche de matériau associé et au niveau de ladite première ouverture.

5. Procédé de croissance contrôlée de nanotubes ou nanofibres selon l'une des revendications 1 à 4, comprenant le dépôt préalable d'une couche barrière de diffusion vis-à-vis du catalyseur (31), sur le substrat.

6. Procédé de croissance contrôlée de nanotubes ou nanofibres selon l'une des revendications 1 à 5, le matériau constitutif des nanotubes ou nanofibres étant de type carbone, silicium, bore ou de tout autre alliage basé sur l'un au moins de ces éléments et pouvant comprendre de l'azote.

7. Procédé de croissance contrôlée de nanotubes ou nanofibres selon l'une des revendications 1 à 6, le matériau catalyseur étant de type nickel, cobalt, fer, platine, yttrium ou tout autre alliage basé sur l'un au moins de ces éléments.

8. Procédé de croissance contrôlée de nanotubes ou nanofibres selon l'une des revendications 1 à 7, le matériau associé étant de type silicium.

9. Procédé de fabrication de cathode à effet de champ comportant les étapes suivantes :
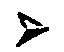 la réalisation d'un empilement de couches sur un substrat (11) comportant :
- une structure bicouche composée d'une couche de matériau catalyseur (71) et d'une couche de matériau associé (91), ledit matériau associé étant tel qu'il forme un alliage avec le matériau catalyseur à haute température,
- une couche épaisse d'isolant (41),
- une couche métallique constitutive de la grille (51)
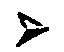 la gravure anisotrope de la grille et la gravure isotrope de l'isolant ;
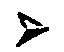 la gravure anisotrope de la couche de matériau associé, lesdites gravures de la grille et du matériau associé définissant respectivement au moins une première ouverture dans la grille et au moins une première ouverture dans la couche de matériau associé, autoalignées ;
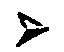 le recuit à haute température de l'ensemble préconstitué de manière à former une couche unique d'alliage (79) de matériau catalyseur et de matériau associé, ladite couche unique d'alliage présentant au moins une seconde ouverture.
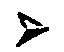 la croissance localisée des nanotubes (81) à partir du matériau catalyseur dans la seconde ouverture.

10. Procédé de fabrication de cathode à effet de champ comportant les étapes suivantes :
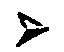 la réalisation d'un empilement de couches sur un substrat comportant :
- une couche de matériau associé (91), ledit matériau associé étant tel qu'il forme un alliage avec un matériau catalyseur de croissance de nanotubes, à haute température,
- une couche épaisse d'isolant,
- une couche conductrice constitutive de la grille de la cathode,
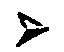 la gravure anisotrope de la grille et la gravure isotrope de l'isolant ;
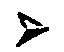 la gravure anisotrope de la couche de matériau associé, lesdites gravures de la grille et du matériau associé définissant respectivement au moins une première ouverture dans la grille et au moins une première ouverture dans la couche de matériau associé, autoalignées
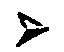 le dépôt d'une couche de catalyseur (71) sur la couche de matériau associé et sur son ouverture ;
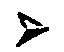 le recuit à haute température de l'ensemble préconstitué de manière à fournir une couche unique d'alliage (79) de matériau catalyseur et de matériau associé, ladite couche unique d'alliage présentant au moins une seconde ouverture de manière à localiser le matériau catalyseur dans cette seconde ouverture ;
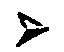 la croissance localisée des nanotubes (81) à partir du matériau catalyseur dans la seconde ouverture.

11. Procédé de fabrication de cathode à effet de champ selon l'une des revendications 9 ou 10, le dépôt de la couche de catalyseur étant effectué par évaporation homogène de matériau catalyseur.

12. Procédé de fabrication de cathode à effet de champ selon l'une des revendications 9 à 11, les premières ouvertures et les secondes ouvertures étant autoalignées.

13. Procédé de fabrication de cathode à effet de champ selon l'une des revendications 9 à 12, comprenant le dépôt d'une couche conductrice (21) sur le substrat.

14. Procédé de fabrication de cathode à effet de champ selon l'une des revendications 9 à 13, comprenant le dépôt préalable d'une couche barrière de diffusion vis-à-vis du catalyseur 31, sur le substrat.

15. Procédé de fabrication de cathode à effet de champ selon l'une des revendications 9 à 14, le matériau constitutif des nanotubes ou nanofibres étant de type carbone, silicium, bore ou de tout autre alliage basé sur l'un au moins de ces éléments et pouvant comprendre de l'azote.

16. Procédé de fabrication de cathode à effet de champ selon l'une des revendications 9 à 15, le matériau catalyseur étant de type nickel, cobalt, fer, platine, yttrium ou tout autre alliage basé sur l'un au moins de ces éléments.

17. Procédé de fabrication de cathode à effet de champ selon l'une des revendications 9 à 16, le matériau associé étant de type silicium.

## Patentansprüche

1. Verfahren für kontrolliertes Wachstum von Nanoröhren und Nanofasern auf einem Substrat, umfassend:
- die Erstellung einer zweischichtigen Struktur auf dem Substrat (11), die aus einer Schicht aus Katalysatormaterial (71) und einer Schicht aus assoziiertem Material (91) zusammengesetzt ist, wobei sich das assoziierte Material dergestalt darstellt, dass es mit dem Katalysatormaterial bei hoher Temperatur eine nicht katalytische Legierung bildet, wobei die zweischichtige Struktur mindestens eine erste Öffnung im Bereich der Schicht aus assoziiertem Material dergestalt aufweist, dass sie lokal eine Struktur mit einer einzigen Schicht aus Katalysatormaterial ausbildet;
- das Glühen der zweischichtigen Struktur, bei hoher Temperatur, dergestalt, dass eine einzige Legierungsschicht (79) aus Katalysatormaterial und aus assoziiertem Material gebildet wird, wobei die einzige Legierungsschicht mindestens eine zweite Öffnung dergestalt aufweist, dass das Katalysatormaterial in dieser zweiten Öffnung örtlich begrenzt wird;
- das Wachstum von Nanoröhren oder Nanofasern (81) auf der Grundlage des Katalysatormaterials, das in der zweiten Öffnung örtlich begrenzt wird;

2. Verfahren für kontrolliertes Wachstum von Nanoröhren oder Nanofasern nach Anspruch 1, wobei die ersten Öffnungen und die zweiten Öffnungen selbstausgerichtet sind.

3. Verfahren für kontrolliertes Wachstum von Nanoröhren oder Nanofasern nach einem der Ansprüche 1 oder 2, umfassend:
- die Ablagerung der Schicht aus assoziiertem Material (91) auf der Oberfläche der Schicht aus Katalysatormaterial (71);
- die Erstellung von mindestens einer ersten Öffnung in der Schicht aus assoziiertem Material (91).

4. Verfahren für kontrolliertes Wachstum von Nanoröhren oder Nanofasern nach einem der Ansprüche 1 oder 2, umfassend:
- die Ablagerung der Schicht aus assoziiertem Material (91) auf der Oberfläche des Substrats (11);
- die Erstellung von mindestens einer ersten Öffnung in der Schicht aus assoziiertem Material (91);
- die Ablagerung der Katalysatorschicht (71) auf der Oberfläche der Schicht aus assoziiertem Material und im Bereich der ersten Öffnung.

5. Verfahren für kontrolliertes Wachstum von Nanoröhren oder Nanofasern nach einem der Ansprüche 1 bis 4, die vorherige Ablagerung, auf dem Substrat, einer Diffusionssperrschicht (31) in Bezug auf den Katalysator umfassend.

6. Verfahren für kontrolliertes Wachstum von Nanoröhren oder Nanofasern nach einem der Ansprüche 1 bis 5, wobei das Grundmaterial der Nanoröhren oder Nanofasern aus Kohlenstoff, Silizium, Bor oder aus irgendeiner weiteren Legierung besteht, die auf mindestens einem dieser Elemente basiert und Stickstoff umfassen kann.

7. Verfahren für kontrolliertes Wachstum von Nanoröhren oder Nanofasern nach einem der Ansprüche 1 bis 6, wobei das Katalysatormaterial aus Nickel, Kobalt, Eisen, Platin, Yttrium oder aus irgendeiner weiteren Legierung besteht, die auf mindestens einem dieser Elemente basiert.

8. Verfahren für kontrolliertes Wachstum von Nanoröhren oder Nanofasern nach einem der Ansprüche 1 bis 7, wobei das assoziierte Material aus Silizium besteht.

9. Verfahren zur Herstellung einer Feldeffektkathode, die nachfolgenden Schritte umfassend:
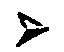 die Erstellung einer Stapelung von Schichten auf einem Substrat (11), umfassend:
- eine zweischichtige Struktur, die aus einer Schicht aus Katalysatormaterial (71) und einer Schicht aus assoziiertem Material (91) zusammengesetzt ist, wobei sich das assoziierte Material dergestalt darstellt, dass es mit dem Katalysatormaterial bei hoher Temperatur eine Legierung bildet,
- eine dicke Isolierungsschicht (41),
- eine Metallschicht als Grundbestandteil des Gatters (51),
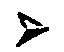 die anisotrope Ätzung des Gatters und die isotrope Ätzung der Isolierung;
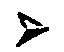 die anisotrope Ätzung der Schicht aus assoziiertem Material,
wobei die Ätzungen des Gatters und des assoziierten Materials jeweils mindestens eine erste Öffnung in dem Gatter und mindestens eine erste Öffnung in der Schicht aus assoziiertem Material definieren, die selbstausgerichtet sind;
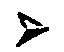 das Glühen bei hoher Temperatur der zuvor gefertigten Baueinheit dergestalt, dass eine einzige Legierungsschicht (79) aus Katalysatormaterial und aus assoziiertem Material gebildet wird, wobei die einzige Legierungsschicht mindestens eine zweite Öffnung aufweist.
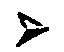 das lokalisierte Wachstum der Nanoröhren (81) auf der Grundlage des Katalysatormaterials in der zweiten Öffnung.

10. Verfahren zur Herstellung einer Feldeffektkathode, die nachfolgenden Schritte umfassend:
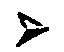 die Erstellung einer Stapelung von Schichten auf einem Substrat, umfassend:
- eine Schicht aus assoziiertem Material (91), wobei sich das assoziierte Material dergestalt darstellt, dass es mit dem Katalysatormaterial für Wachstum von Nanoröhren bei hoher Temperatur eine Legierung bildet,
- eine dicke Isolierungsschicht,
- eine leitende Schicht als Grundbestandteil des Gatters der Kathode,
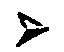 die anisotrope Ätzung des Gatters und die isotrope Ätzung der Isolierung;
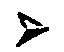 die anisotrope Ätzung der Schicht aus assoziiertem Material,
wobei die Ätzungen des Gatters und des assoziierten Materials jeweils mindestens eine erste Öffnung in dem Gatter und mindestens eine erste Öffnung in der Schicht aus assoziiertem Material definieren, die selbstausgerichtet sind;
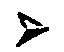 die Ablagerung einer Katalysatorschicht (71) auf der Schicht aus assoziiertem Material und in seiner Öffnung;
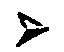 das Glühen bei hoher Temperatur der zuvor gefertigten Baueinheit dergestalt, dass eine einzige Legierungsschicht (79) aus Katalysatormaterial und aus assoziiertem Material bereitgestellt wird, wobei die einzige Legierungsschicht mindestens eine zweite Öffnung dergestalt aufweist, dass das Katalysatormaterial in dieser zweiten Öffnung örtlich begrenzt wird;
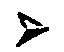 das lokalisierte Wachstum der Nanoröhren (81) auf der Grundlage des Katalysatormaterials in der zweiten Öffnung.

11. Verfahren zur Herstellung einer Feldeffektkathode nach einem der Ansprüche 9 oder 10, wobei die Ablagerung der Katalysatorschicht durch homogene Verdampfung von Katalysatormaterial durchgeführt wird.

12. Verfahren zur Herstellung einer Feldeffektkathode nach einem der Ansprüche 9 bis 11, wobei die ersten Öffnungen und die zweiten Öffnungen selbstausgerichtet sind.

13. Verfahren zur Herstellung einer Feldeffektkathode nach einem der Ansprüche 9 bis 12, die Ablagerung einer leitenden Schicht (21) auf dem Substrat umfassend.

14. Verfahren zur Herstellung einer Feldeffektkathode nach einem der Ansprüche 9 bis 13, die vorherige Ablagerung, auf dem Substrat, einer Diffusionssperrschicht (31) in Bezug auf den Katalysator umfassend.

15. Verfahren zur Herstellung einer Feldeffektkathode nach einem der Ansprüche 9 bis 14, wobei die Art des Grundmaterials der Nanoröhren oder Nanofasern aus Kohlenstoff, Silizium, Bor oder aus irgendeiner weiteren Legierung besteht, die auf mindestens einem dieser Elemente basiert und Stickstoff umfassen kann.

16. Verfahren zur Herstellung einer Feldeffektkathode nach einem der Ansprüche 9 bis 15, wobei die Art des Katalysatormaterials aus Nickel, Kobalt, Eisen, Platin, Yttrium oder irgendeiner weiteren Legierung besteht, die auf mindestens einem dieser Elemente basiert.

17. Verfahren zur Herstellung einer Feldeffektkathode nach einem der Ansprüche 9 bis 16, wobei das assoziierte Material aus Silizium besteht.

## Claims

1. Process for the controlled growth of nanotubes or nanofibres on a substrate, comprising:
- the production on the substrate (11) of a bi-layer structure composed of a layer of catalyst material (71) and a layer of associated material (91), said associated material being such that it forms a noncatalytic alloy with the catalyst material at high temperature, said bi-layer structure having at least one first aperture in the layer of associated material so as to locally constitute a structure consisting of a single layer of catalyst material;
- the annealing of the bi-layer structure at high temperature so as to form a single layer (79) of a catalyst material/associated material alloy, said single layer of alloy having at least one second aperture so as to localize the catalyst material in this second aperture; and
- the growth of the nanotubes or nanofibres (81) from the catalyst material localized in the second aperture.

2. Controlled nanotube or nanofibre growth process according to Claim 1, the first apertures and the second apertures being self-aligned.

3. Controlled nanotube or nanofibre growth process according to either of Claims 1 and 2, comprising:
- the deposition of the layer of associated material (91) on the surface of the layer of catalyst material (71); and
- the production of at least one first aperture in the layer of associated material (91).

4. Controlled nanotube or nanofibre growth process according to either of Claims 1 and 2, comprising:
- the deposition of the layer of associated material (91) on the surface of the substrate (11);
- the production of at least one first aperture in the layer of associated material (91); and
- the deposition of the layer of catalyst (71) on the surface of the layer of associated material and in said first aperture.

5. Controlled nanotube or nanofibre growth process according to one of Claims 1 to 4, comprising the prior deposition of a catalyst diffusion barrier layer (31) on the substrate.

6. Controlled nanotube or nanofibre growth process according to one of Claims 1 to 5, the constituent material of the nanotubes or nanofibres being of a carbon, silicon or boron type or is made of any alloy based on at least one of these elements and possibly containing nitrogen.

7. Controlled nanotube or nanofibre growth process according to one of Claims 1 to 6, the catalyst material being of the nickel, cobalt, iron, platinum or yttrium type or made of any other alloy based on at least one of these elements.

8. Controlled nanotube or nanofibre growth process according to one of Claims 1 to 7, the associated material being silicon.

9. Process for fabricating a field-emission cathode, comprising the following steps:
> the production of a multilayer stack on a substrate (11), comprising:
- a bi-layer structure composed of a layer of catalyst material (71) and a layer of associated material (91), said associated material being such that it forms an alloy with the catalyst material at high temperature,
- a thick layer of insulation (41) and
- a metal layer constituting the grid (51);
> the anisotropic etching of the grid and the isotropic etching of the insulation;
> the anisotropic etching of the layer of associated material, said operations of etching the grid and the associated material defining, respectively, at least one first aperture in the grid and at least one first aperture in the layer of associated material, said apertures being self-aligned;
> the high-temperature annealing of the preformed assembly so as to form a single layer of a catalyst material/associated material alloy (79), said single layer of alloy having at least one second aperture; and
> the localized growth of the nanotubes (81) from the catalyst material in the second aperture.

10. Field-emission cathode fabrication process, comprising the following steps:
> the production of a multilayer stack on a substrate comprising:
- a layer of associated material (91), said associated material being such that it forms, at high temperature, an alloy with a catalyst material for catalyzing the growth of nanotubes,
- a thick layer of insulation and
- a conducting layer constituting the grid of the cathode;
> the anisotropic etching of the grid and the isotropic etching of the insulation;
> the anisotropic etching of the layer of associated material, said operations of etching the grid and the associated material defining, respectively, at least one first aperture in the grid and at least one first aperture in the layer of associated material, said apertures being self-aligned;
> the deposition of a catalyst layer (71) on the layer of associated material and in its aperture;
> the high-temperature annealing of the preformed assembly so as to provide a single layer of a catalyst material/associated material alloy (79), said single layer of alloy having at least one second aperture so as to localize the catalyst material in this second aperture; and
> the localized growth of the nanotubes (81) from the catalyst material in the second aperture.

11. Field-emission cathode fabrication process according to either of Claims 9 and 10, the catalyst layer being deposited by uniform evaporation of catalyst material.

12. Field-emission cathode fabrication process according to one of Claims 9 to 11, the first and second apertures being self-aligned.

13. Field-emission cathode fabrication process according to one of Claims 9 to 12, comprising the deposition of a conducting layer (21) on the substrate.

14. Field-emission cathode fabrication process according to one of Claims 9 to 13, comprising the prior deposition of a catalyst diffusion barrier layer 31 on the substrate.

15. Field-emission cathode fabrication process according to one of Claims 9 to 14, the constituent material of the nanotubes or nanofibres being of the carbon, silicon or boron type or made of any other alloy based on at least one of these elements and possibly containing nitrogen.

16. Field-emission cathode fabrication process according to one of Claims 9 to 15, the catalyst material being of the nickel, cobalt, iron, platinum or yttrium type or made of any other alloy based on at least one of these elements.

17. Field-emission cathode fabrication process according to one of Claims 9 to 16, the associated material being of the silicon type.
